# EUROPÄISCHE PATENTSCHRIFT

(11) **EP 2 263 001 B1**
(45) Veröffentlichungstag und Bekanntmachung des Hinweises auf die Patenterteilung: **15.03.2017**
(21) Anmeldenummer: 09718438.6
(22) Anmeldetag: 27.01.2009
(51) Int. Cl.: F02D 41/14, F02D 41/22, G01M 15/10

(54) **VERFAHREN UND VORRICHTUNG ZUR UNTERSCHEIDUNG EINER FEHLERHAFT ERWARTETEN VON EINER FEHLERHAFT ERFASSTEN KONZENTRATION EINES ABGASBESTANDTEILS EINES VERBRENNUNGSMOTORS**
METHOD AND DEVICE FOR DISTINGUISHING AN ERRONEOUSLY EXPECTED CONCENTRATION FROM AN ERRONEOUSLY DETECTED CONCENTRATION OF AN EXHAUST GAS COMPONENT OF AN INTERNAL COMBUSTION ENGINE
PROCÉDÉ ET DISPOSITIF DE DIFFÉRENCIATION ENTRE UNE CONCENTRATION ATTENDUE PAR ERREUR ET UNE CONCENTRATION DÉTECTÉE PAR ERREUR D UNE COMPOSANTE DES GAZ D ÉCHAPPEMENT D UN MOTEUR À COMBUSTION INTERNE

(30) Priorität: 07.03.2008 DE 102008000567
(43) Veröffentlichungstag der Anmeldung: 22.12.2010
(73) Patentinhaber: Robert Bosch GmbH, 70442 Stuttgart (DE)
(72) Erfinder: WEIGAND, Volker, Farmington Hills MI 48331 (US); GEBERS, Michael, Farmington Hills MI 48331 (US); WAGNER, Joachim, 97616 Bad Neustadt (DE)
(86) Internationale Anmeldenummer: PCT/EP2009/050881
(87) Internationale Veröffentlichungsnummer: WO 2009/109421

(56) Entgegenhaltungen:
- EP-A- 0 624 721
- EP-A- 1 715 165
- EP-A- 1 878 900
- DE-A1- 4 418 010
- DE-A1-102005 022 407

## Beschreibung

### Stand der Technik

Die Erfindung betrifft Verfahrens- und Vorrichtungsaspekte zur Unterscheidung einer fehlerhaft erwarteten Konzentration von einer fehlerhaft erfassten Konzentration eines Abgasbestandteils eines Verbrennungsmotors, wobei sich eine tatsächliche Konzentration durch Vorgabe von Luftmengenstellwerten und Kraftstoffmengenstellwerten einstellt. Luftmengenstellwerte sind Ansteuersignale für eine Drosselklappen- oder RegelklappenÖffnungswinkel-Verstellung, eines Abgasrückführventils und oder eines Ladedruckstellglieds. Kraftstoffmengenstellwerte sind zum Beispiel Ansteuersignale für ein Kraftstoff-Einspritzventile und einen Druck in einem Kraftstoffhochdruckspeicher eines Speichereinspritzsystems.

Bei der Verbrennung von Kraftstoff und Luft in Verbrennungsmotoren stellt sich im Abgas eine tatsächliche Konzentration eines Abgasbestandteils wie Sauerstoff oder Stickoxid ein. Bei der Steuerung moderner Verbrennungsmotoren wird die der Verbrennung zugeführte Luftmasse in der Regel gemessen. Die zur Luftmasse dosierte Kraftstoffmenge ergibt sich bei fehlerfreier Dosierung aus den Kraftstoffmengenstellwerten.

Nach dem Stand der Technik werden zur Überwachung und Regelung von in Kraftfahrzeugen eingesetzten Verbrennungsmotoren Abgassensoren eingesetzt. Bekannte Beispiele solcher Abgassensoren sind Lambdasensoren oder NOx-Sensoren, wie sie zum Beispiel im Kraftfahrtechnischen Taschenbuch, 25. Auflage 2003, ISBN 3-528-23876-3, Seiten 133 und 134 unter der Überschrift "Konzentrationssensoren" vorgestellt werden. Diese Sensoren erfassen jeweils die Konzentration eines Abgasbestandteils. Im Falle des Lambdasensors wird die Sauerstoffkonzentration erfasst, während im Falle des NOx-Sensors eine Stickoxid-Konzentration im Abgas erfasst wird.

Bisher bekannte Verfahren zur Detektion eines defekten oder verstimmten Lambdasensors basieren auf einer Anregung der Brennkraftmaschine durch eine Änderung der zugeführten Kraftstoffmenge und einer anschließenden Auswertung des Signals der Lambdasonde. Ein solches Verfahren wird z.B. in der EP 1 715 165 A2 offenbart. Bei fehlerfreiem Dosiersystem und fehlerfreiem Lambdasensor bildet sich die Änderung der Kraftstoffmenge im Signal des Lambdasensors, also in der erfassten Konzentration, ab.
Es sind auch Verfahren zur Diagnose von Fehlern im Dosiersystem bekannt, die ebenfalls auf einer Anregung der Brennkraftmaschine durch eine Änderung der zugeführten Kraftstoffmenge und einer Bewertung des Lambdasignals basieren.

Eine Berechnung der Sauerstoffkonzentration aus den Kraftstoffmengenstellwerten und den Luftmengenstellwerten und ein Vergleich mit der jeweils erfassten Sauerstoffkonzentration ermöglicht quantitative Rückschlüsse jedoch nur dann, wenn entweder das Dosiersystem oder der Lambdasensor als fehlerfrei vorausgesetzt wird. Bildet sich eine Änderung der Kraftstoffmengenstellwerte nicht oder nur unerwartet schwach in der erfassten Konzentration ab, kann das daran liegen, dass das Dosiersystem unerwartet schwach auf die Änderung der Stellwerte reagiert. Möglich ist aber auch, dass ein fehlerhafter Lambdasensor die tatsächliche Änderung der Konzentration nicht richtig erfasst.
Nach dem Stand der Technik ist ein Verfahren für die Unterscheidung zwischen einem Fehler in der Erfassung eines Abgasbestandteils, beispielsweise verursacht durch einen defekten Abgassensor, und einem Fehler in der erwarteten Konzentration, beispielsweise verursacht durch ein defektes Dosiersystem, nicht bekannt. Ein defektes Dosiersystem führt zum Beispiel dazu, dass zu wenig Kraftstoff zugemessen wird. Bei der Bildung eines Erwartungswertes für die Konzentration des Abgasbestandteils wird dagegen von einer korrekten Kraftstoffdosierung ausgegangen. Der Erwartungswert für die Konzentration des Abgasbestandteils weicht dann von der tatsächlichen Konzentration ab. Der unter der Voraussetzung einer korrekten Kraftstoffzumessung gebildete Erwartungswert ist daher fehlerhaft. Es kann dann zu Fehldiagnosen kommen. Unter Umständen werden funktionsfähige Teile (z.B. Abgassensor) getauscht, während tatsächlich defekte Komponenten (z.B. Einspritzventile) nicht erkannt werden.

### Offenbarung der Erfindung

Vor diesem Hintergrund besteht die Aufgabe der Erfindung in der Angabe eines Verfahrens und einer Vorrichtung, die jeweils eine Unterscheidung einer fehlerhaft erwarteten von einer fehlerhaft erfassten Konzentration eines Abgasbestandteils im Abgas eines Verbrennungsmotors ermöglichen.

Mit Blick auf die Verfahrensaspekte wird diese Aufgabe mit den Merkmalen des Anspruchs 1 und mit Blick auf die Vorrichtungsaspekte sowohl mit den Merkmalen des Anspruchs 7 als auch mit den Merkmalen des Anspruchs 9 gelöst.

Die vorgeschlagene Diagnose führt zu einer hohen Reproduzierbarkeit der Diagnoseergebnisse. Insbesondere werden Fehldiagnosen vermieden und die tatsächliche Fehlerursache kann eindeutig der entsprechenden Komponente zugeordnet werden. Ebenso kann ein Ausbau der zu diagnostizierenden Komponenten vermieden werden. Die Geschwindigkeit der Diagnose wird dadurch erhöht. Zuverlässige Diagnosergebnisse können schon nach etwa 10 Sekunden vorliegen, da sich das Verfahren in dieser kurzen Zeitspanne ohne Montage und/oder Demontage von Komponenten durchführen lässt. Die Erfindung ist prinzipiell nicht auf spezielle Arten von Einspritzsystemen beschränkt und lässt sich überall dort verwenden, wo Konzentrationen im Abgas von Verbrennungsmotoren erfasst werden, die mit Hilfe von Luftmassenstellwerten und Kraftstoffmengenstellwerten gesteuert oder geregelt werden.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
Fig. 1 das technische Umfeld der Erfindung;
Fig. 2 eine Folge von Betriebspunkten, die bei einem Ausführungsbeispiel des Verfahrens angefahren werden;
Fig. 3 einen Verlauf einer Sauerstoffkonzentration über dem Kurbelwellenwinkel bei der Folge nach Fig. 2 und fehlerfreiem System;
Fig. 4 Verläufe von Sauerstoffkonzentrationen über der Zeit beim Durchlaufen einer Folge nach Fig. 2 bei fehlerhafter Erfassung der Sauerstoffkonzentration; und
Fig. 5 Verläufe von Sauerstoffkonzentrationen über der Zeit beim Durchlaufen einer Folge nach Fig. 2 bei fehlerhafter Berechnung der Sauerstoffkonzentration.

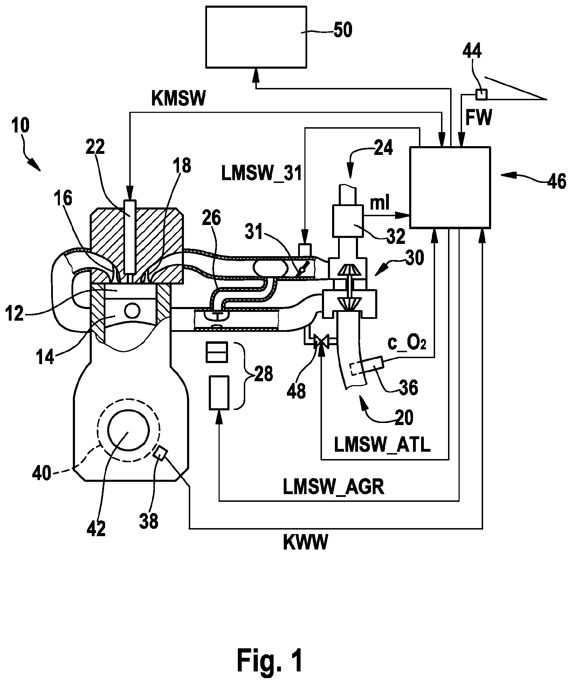

Im Einzelnen zeigt die Figur 1 einen Dieselmotor 10 mit einem Brennraum 12, der von einem Kolben 14 beweglich abgedichtet wird. Durch Betätigen eines Einlassventils 18 und eines Auslassventils 16 wird ein Wechsel von Füllungen des Brennraums 12 gesteuert. Abgase verbrannter Füllungen werden über ein Abgassystem 20 abgeleitet. Zu einer vorhandenen Füllung des Brennraums 12 mit Luft wird Kraftstoff über einen Injektor 22 dosiert, wobei die Dosierung auch die Verbrennung einleitet. Die Füllung des Brennraums 12 mit Luft erfolgt über ein Ansaugsystem 24. Ansaugsystem 24 und Abgassystem 20 sind über eine Abgasrückführung aus einer Verbindungsleitung 26 und einem Abgasrückführventil 28 verbunden. Optional weist der Dieselmotor 10 ferner einen Abgasturbolader 30 auf, der im Ansaugsystem 24 vor dem Einlassventil 18 einen Ladedruck p_lade erzeugt. Eine Regelklappe 31 im Ansaugsystem 24 ist zwischen dem Verdichter des Abgasturboladers 30 und einer Einmündung der Verbindungsleitung 26 in das Ansaugsystem 24 angeordnet.

Die Masse mL der in den Dieselmotor 10 strömenden Luft wird mit einem Luftmassenmesser 32, bspw. einem Heißfilm-Luftmassenmesser, erfasst. Die Sauerstoffkonzentration c_O₂ im Abgas, die ein Maß für die Luftzahl Lambda des im Brennraum 12 verbrannten Gemisches ist, wird von einem Abgassensor 36 erfasst. Alternativ oder ergänzend dient der Abgassensor 36 zur Erfassung einer NOx-Konzentration im Abgas. In einer Ausgestaltung werden die Sauerstoffkonzentrationen und die Stickoxidkonzentrationen mit separaten Abgassensoren bestimmt.

Ferner weist der Dieselmotor 10 eine Winkelsensorik auf, die in der Regel aus einem Nockenwellenwinkelsensor und einem Kurbelwellenwinkelsensor besteht und eine genaue Erfassung der Winkelposition der Kurbelwelle in dem Arbeitszyklus des Verbrennungszyklus des Dieselmotors 10 erlaubt. In der Figur 1 ist stellvertretend für die Winkelsensorik ein Kurbelwellenwinkelsensor 38 dargestellt, der Winkelmarkierungen 40 eines Geberrades 42 induktiv abtastet und eine Kurbelwellenwinkelinformation KWW bereitstellt. Bestimmte Kurbelwellenwinkelbereiche werden dabei als Segmente, z. b. als 60°-, 120°- oder 180°-Segmente betrachtet. Durch Zählen der Segmente kann daher ein Drehwinkelbereich erfasst werden, der ab einem bestimmten auslösenden Ereignis überstrichen worden ist. Ein Fahrerwunschgeber 44 erfasst eine Drehmomentanforderung FW eines Fahrers.

Ein Steuergerät 46 verarbeitet die Signale mL, KWW, Lambda und bildet daraus Stellgrößen zur Steuerung des Dieselmotors 10. In der Darstellung der Figur 1 sind dies insbesondere Kraftstoffmengenstellwerte KMSW für den Injektor 22 zur Dosierung der Kraftstoffzufuhr und Luftmengenstellwerte LMSW__AGR zur Steuerung der Abgasrückführung, LMSW_31 zur Steuerung der Regelklappe 31 und LMSW_ATL zur Steuerung des Turboladers 30 über ein Ladedruckstellglied. Das Ladedruckstellglied kann zum Beispiel ein Bypassventil 48 oder ein Stellglied für eine Verstellung der Turbinengeometrie bei VTG-Ladern sein(VTG = variable Turbinengeometrie). Da der Dieselmotor 10 weitgehend ungedrosselt betrieben wird, erfolgt eine Einstellung des abgasrelevanten Frischluftanteils der Brennraumfüllungen über die Abgasrückführung. Je größer die rückgeführte Abgasmenge ist, desto kleiner ist der Frischluftanteil an einer Brennraumfüllung. Es versteht sich, dass zur Steuerung des Dieselmotors 10 auch weitere Sensoren, zum Beispiel Temperatursensoren, Ladedrucksensoren etc. und weitere Stellglieder, zum Beispiel eine Drallklappe in einem vom mehreren Einlasskanälen eines Brennraums, vorhanden sein können.

Im Übrigen ist das Steuergerät 46 dazu eingerichtet, inbesondere dazu programmiert, ein in dieser Anmeldung vorgestelltes Verfahren auszuführen, wobei unter einer Ausführung die Steuerung des Verfahrensablaufs verstanden wird. Ein solches Steuergerät zeichnet sich durch die Merkmale des Anspruchs 7 aus. Alternativ wird der Verfahrensablauf durch ein Fahrzeug-externes Testgerät 50, das zum Beispiel ein Werkstatt-Testgerät sein kann, in Verbindung mit dem Steuergerät 46 gesteuert. Ein solches Testgerät 50 zeichnet sich durch die Merkmale des Anspruchs 9 aus und ist dazu eingerichtet, inbesondere dazu programmiert, ein in dieser Anmeldung vorgestelltes Verfahren in gemeinsam mit dem Steuergerät 46 auszuführen, wobei auch hier unter einer Ausführung die Steuerung des Verfahrensablaufs verstanden wird.

Die Erfindung basiert auf der Erkenntnis, dass sich die Konzentration des Abgasbestandteils beim Betreiben des Verbrennungsmotors 10 in den verschiedenen Betriebspunkten und/oder beim Übergang zwischen den Betriebspunkten ändert, wobei Richtung und/oder Ausmaß und/oder zeitlicher Verlauf der Änderungen verschieden ausfallen, je nachdem, ob die Bildung eines Erwartungswertes und die Erfassung fehlerfrei erfolgt, nur die Bildung des Erwartungswertes fehlerfrei ist oder nur die Erfassung fehlerfrei ist.

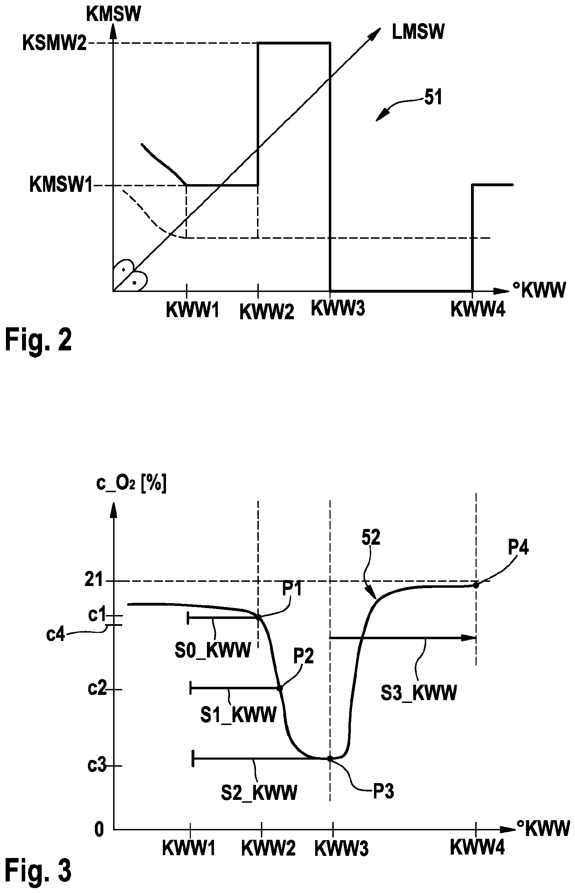

Im Folgenden wird unter wechselndem Bezug auf die Figuren 2 und 3 ein Ausführungsbeispiel eines erfindungsgemäßen Verfahrens erläutert, bei dem eine Folge von Betriebspunkten P1, P2, P3, P4 mit verschiedenen Sauerstoffkonzentrationen im

Abgas nacheinander angefahren wird. Es versteht sich aber, dass die Erfindung nicht auf das spezielle Muster von Betriebspunkten beschränkt ist und auch mit anderen Mustern von Betriebspunkten durchgeführt werden kann, bei dem Richtung und/oder Ausmaß und/oder zeitlicher Verlauf der Änderungen der Konzentration verschieden ausfallen, je nachdem, ob die Berechnung und die Erfassung fehlerfrei erfolgt, nur die Berechnung fehlerfrei ist oder nur die Erfassung fehlerfrei ist.

Im Einzelnen zeigt Fig. 2 ein dreidimensionales Koordinatensystem, das durch Kurbelwellenwinkelwerte °KWW, Luftmassenstellwerte LMSW und Kraftstoffmengenstellwerte KWSW aufgespannt wird. Dabei versteht sich, dass an Stelle der °KWW-Achse eine Zeitachse gewählt werden kann. Ferner zeigt Fig. 2 einen Verlauf 51 des Kraftstoffmengenstellwerts KMSW bei einem Ausführungsbeispiel des Verfahrens.

Fig. 3 zeigt einen Verlauf 52 der Sauerstoffkonzentration c_O₂ über dem gleichen Kurbelwellenwinkel KWW wie bei der Fig. 2 bei fehlerfreiem System und zeigt damit insbesondere tatsächliche Sauerstoffkonzentrationen, die sich bei fehlerfreiem System in den dargestellten Betriebspunkten P1, P2, P3 und P4 einstellen und als solche auch richtig erwartet und erfasst werden.

In einer bevorzugten Ausgestaltung wird das Verfahren bei still stehendem Fahrzeug ausgeführt. Es beginnt bei einem Kurbelwellenwinkel KWW1 im Leerlauf des Verbrennungsmotors. Zur Durchführung des Verfahrens wird der Verbrennungsmotor ab dem bestimmten Kurbelwellenwinkel °KWW1 mit konstanten Luftmassenstellwerten LMSW = konstant betrieben. Dazu werden die Stellglieder, also das Abgasrückführventil 28, die Regelklappe 31, das Bypassventil 48 und/oder ein anderes Ladedruckstellglied und/oder eine Drallklappe so angesteuert, dass sich insgesamt ein maximaler Luftdurchsatz durch den Verbrennungsmotor ergibt. Dann stellt sich durch die Leerlaufregelung ein im zeitlichen Mittel konstanter Wert der zugemessenen Kraftstoffmenge und damit auch ein im zeitlichen Mittel konstanter Kraftstoffmengenstellwert KMSW ein, bei dem die Leerlaufdrehzahl aufrechterhalten wird. Durch die gleichzeitig konstanten Luftmassenstellwerte stellt sich dann, ggf. nach einer Phase des Einschwingens, eine erste Sauerstoffkonzentration c1 (und/oder Stickoxid-Konzentration) im Abgas ein.

Nach dem Verstreichen einer vorbestimmten Anzahl von Segmenten, also nach dem Verstreichen einer vorbestimmten Kurbelwellenwinkelspanne S0_KWW wird bei einem Kurbelwellenwinkel KWW2 im Betriebspunkt P1 zunächst die Konzentration des Abgasbestandteils, sei es Sauerstoff oder Stickoxid, vom Abgassensor 36 erfasst. Bei einer kontinuierlichen Erfassung wird die beim Kurbelwellenwinkel KWW2 erfasste Konzentration im Steuergerät 46 gespeichert.

Ferner wird ein Erwartungswert für die Konzentration im Steuergerät aus den im Steuergerät vorliegenden Werten der Stellgrößen und/oder gemessenen Größen wie einer gemessenen Ansaugluftmasse berechnet.

Der Betriebspunkt P1 zeichnet sich also durch konstante, vorbestimmte Luftmassenstellwerte LMSW, einen zur Aufrechterhaltung der Leerlaufdrehzahl erforderlichen Kraftstoffmengenstellwert KMSW1 und einen vorbestimmten nullten Kurbelwellenwinkelabstand S0_KWW zum Start des Verfahrens aus. Die vorbestimmte Anzahl von Segmenten und damit der Kurbelwellenwinkelabstand S0_KWW ist so bemessen, dass sich die Sauerstoffkonzentration im Leerlauf nach der Vorgabe konstanter Luftmassenstellwerte auf den im Wesentlichen stationären Wert c1 einschwingen kann, der sich bei der Leerlaufdrehzahlregelung ergibt.

Nach dem Erfassen und/oder Speichern der Sauerstoffkonzentration wird die pro Arbeitstakt zugeführte Kraftstoffmenge erhöht. Dabei werden die Luftmassenstellwerte LMSW weiter konstant gehalten. Die Erhöhung der Kraftstoffmenge erfolgt bevorzugt sprungartig auf einen Wert KMSW2 und so, dass die Drehzahl des Verbrennungsmotors auf höhere Werte ansteigt. Durch das Erhöhen der Kraftstoffmenge bei konstanten Luftmassenstellwerten nimmt die Sauerstoffkonzentration im Abgas links vom Betriebspunkt P1 zunächst ab.

In einem vorgegebenen ersten Abstand S1_KWW zum Beginn des Betriebs mit dem veränderten Kraftstoffmengenstellwert KSMW2 ergibt sich dann per Definition ein Betriebspunkt P2. Der Betriebspunkt P2 zeichnet sich damit durch konstante, vorbestimmte Luftmassenstellwerte, einen zur Steigerung der Drehzahl erforderlichen und erhöhten Kraftstoffmengenstellwert KSMW2 und einen vorbestimmten ersten Kurbelwellenwinkelabstand S1_KWW zum Start des Verfahrens aus. Im Betriebspunkt P2 werden zweite Werte c2 der Sauerstoffkonzentration erfasst und erwartet.

Anschließend wird ein dritter Betriebspunkt P3 angefahren, der durch konstante, vorbestimmte Luftmassenstellwerte, einen zur Steigerung der Drehzahl erforderlichen und erhöhten Kraftstoffmengenstellwert KSMW2 und einen vorgegebenen zweiten Abstand S2_KWW zum Beginn des Betriebs mit dem veränderten Kraftstoffmengenstellwert KMSW2 definiert ist. Ferner werden auch im dritten Betriebspunkt und/oder für den dritten Betriebspunkt P3 dritte Werte c3 der Sauerstoffkonzentration erfasst und erwartet. Der zweite Abstand S2_KWW ist so vorbestimmt, dass die Drehzahl des Verbrennungsmotors im Betriebspunkt P3 eine vorgegebene Maximaldrehzahl nicht überschreitet.

Nach dem Anfahren des Betriebspunktes P3 wird die Kraftstoffzufuhr abgeschaltet. Folglich steigt die Sauerstoffkonzentration im Abgas wieder an. In einem vorgegebenen dritten Abstand S3_KWW, der vom KWW-Wert beim Beginn der Kraftstoffabschaltung aus gemessen wird, ergibt sich dann per Definition ein vierter Betriebspunkt P4. Für diesen Betriebspunkt P4 werden vierte Werte c4 der Sauerstoffkonzentration erfasst und erwartet. Der dritte Abstand S3_KWW ist so vorbestimmt, dass die vom Verbrennungsmotor bei abgeschalteter Kraftstoffzufuhr gepumpte Luft den Abgassensor 36 erreicht hat, bevor der vierte Wert c4 der Sauerstoffkonzentration erfasst wird.

Anschließend wird ein neuer Satz Betriebsbedingungen, insbesondere ein weiterer Kraftstoffmengenstellwert KMSW und gegebenenfalls nicht mehr konstante Luftmengenstellwerte LMSW vorgegeben, bei denen der Verbrennungsmotor weiter im Leerlauf läuft. Beim Anfahren der Punkte ist bevorzugt, dass das Ausmaß und und/oder die Dauer der Veränderung des Kraftstoffmengenstellwerts vor dem Abschalten der Kraftstoffzufuhr im Leerlauf des Verbrennungsmotors erfolgt und der veränderte Kraftstoffmengenstellwert KMSW2 so bemessen ist, dass die Drehzahl auf einen Wert steigt, der bei der nachfolgenden Abschaltung der Kraftstoffzufuhr ausreicht, um den Verbrennungsmotor nicht vor dem Erreichen des vierten Betriebspunktes P4 ausgehen zu lassen.

Für jeden Betriebspunkt P1, P2, P3, P4 wird der Abstand der gemessenen (erfassten) und erwarteten Sauerstoffkonzentrationen bestimmt und mit einem Schwellenwert verglichen. Für jeden Betriebspunkt Pi mit i = 1, 2, 3, 4 ergibt sich damit jeweils ein Intervall li dessen Breite durch Schwellenwert-Abstände di definiert ist und das jeweils um den Betriebspunkt Pi mit gleichem Index i zentriert ist. Die Schwellenwerte markieren also die Intervallgrenzen. Liegt der erwartete Wert in dem jeweils betrachteten Intervall, wird diesem Betriebspunkt für die Auswertung eine Null zugeordnet. Liegen die erwarteten Werte dagegen außerhalb des Intervalls, wird dem Betriebspunkt eine Eins zugeordnet. Für jedes Durchlaufen der Punkte P1 bis P4 ergibt sich damit ein Muster von Nullen und/oder Einsen.

Bei fehlerfreiem System werden die erwarteten Werte und die erfassten Werte im Wesentlichen übereinstimmen, so dass die Abstände zwischen ihnen kleiner sind als die Abstände zu den Intervallgrenzen. Das resultierende Muster besteht dann aus vier Nullen.

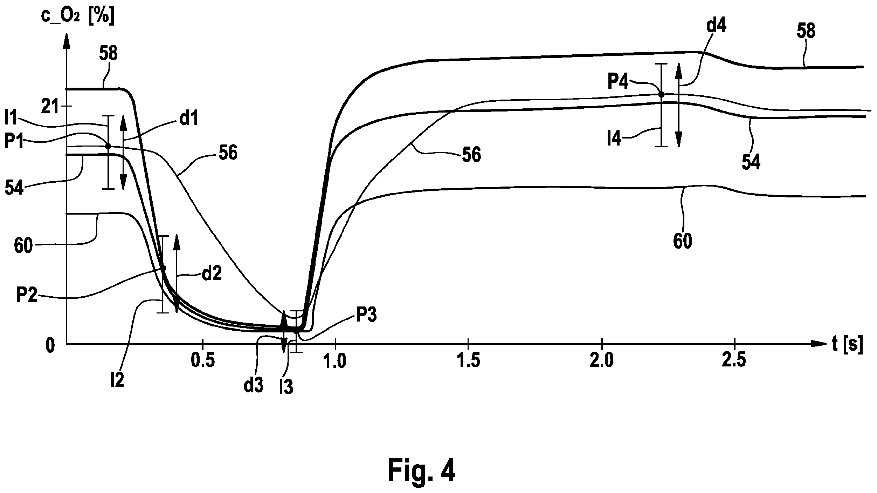

Fig. 4 zeigt, wie sich verschiedene Fehler des Abgassensors 36 in Verläufen 56, 58 und 60 der Sauerstoffkonzentration beim Durchfahren der Punkte P1 bis P4 in der erfassten (gemessenen) Sauerstoffkonzentration abbilden. Der Verlauf 54 entspricht hier dem korrekt erwarteten Verlauf. Die bereits erwähnten Intervalle li der Breite di um die Punkt Pi sind eingezeichnet. Wie das im Vergleich weniger breite Intervall 13 zeigt, können die Intervallbreiten di von Punkt zu Punkt verschieden sein.

Der Verlauf 56 ergibt sich bei einem Abgassensor, der die Änderung der Sauerstoffkonzentration im Abgas erst verzögert in seinem Signal abbildet. Ein solcher Fehler tritt z.B. bei verstopften Löchern in Schutzröhrchen auf, durch die das Abgas hindurchtreten muss, bevor es mit dem eigentlichen Sensor in Berührung kommt. Dieser Fehler äußert sich vor allem darin, dass der für den Punkt P2 erfasste Wert nicht im Intervall 12 liegt, während die für die anderen Punkte P1, P3, P4 erfassten Werte in den zugehörigen Intervallen I1, 13, 14 liegen können. Das resultierende Bitmuster 0 1 0 0 und insbesondere die 1 für den Betriebspunkt P2 deutet damit auf eine fehlerhafte Erfassung durch einen fehlerhaft verzögernden Abgassensor 36 hin.

Der Verlauf 58 ergibt sich bei einem Abgassensor 36 mit nach oben gestreckter Kennlinie. Dieser Fehler äußert sich vor allem darin, dass die für die Punkte P1 und P4 erfassten Werte nicht in den Intervallen I1 und 14 liegen, während die für die anderen Punkte P2, P3 erfassten Werte in den zugehörigen Intervallen 12, 13 liegen können.

Der Verlauf 60 ergibt sich bei einem Abgassensor 36 mit nach unten gestauchter Kennlinie. Dieser Fehler äußert sich ebenfalls darin, dass die für die Punkte P1 und P4 erfassten Werte nicht in den Intervallen I1 und I4 liegen, während die für die anderen Punkte P2, P3 erfassten Werte in den zugehörigen Intervallen 12, 13 liegen können.

Die resultierenden Bitmuster 1 0 0 1 und insbesondere die Einsen für die Betriebspunkte P1 und P4 deuten damit auf eine fehlerhafte Erfassung durch eine fehlerhaft gestreckte oder gestauchte Kennlinie des Abgassensors 36 hin.

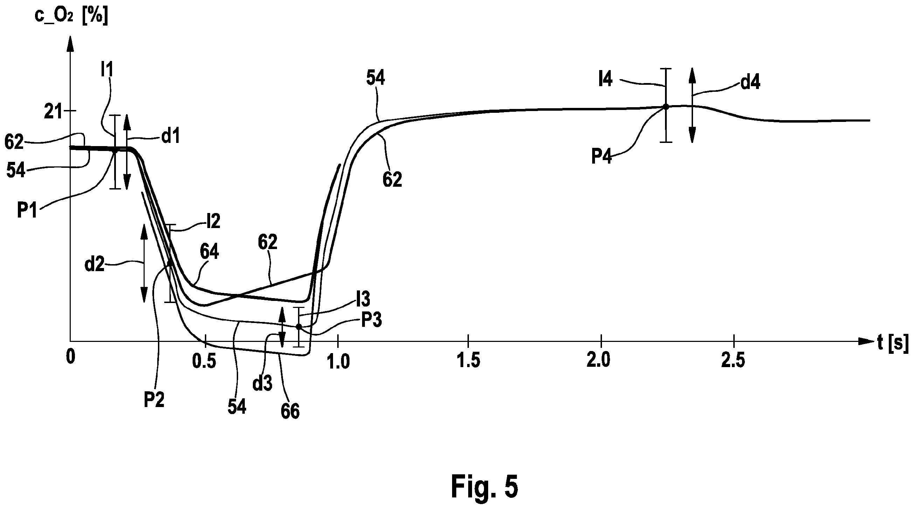

Fig. 5 zeigt, wie sich verschiedene Fehler in der Berechnung in Verläufen 62, 64 und 66 der Sauerstoffkonzentration beim Durchfahren der Punkte P1 bis P4 in der erfassten (gemessenen) Sauerstoffkonzentration abbilden. Der Verlauf 54 entspricht hier dem erwarteten Verlauf im fehlerfreien Zustand. Ein fehlerhaft erwarteter Verlauf tritt zum Beispiel bei Fehlern des Einspritzsystems auf, bei denen im Vergleich zu einer Sollmenge tatsächlich zuviel oder zuwenig Kraftstoff dosiert wird. Da das Steuergerät von der Sollmenge ausgeht, weicht das Ergebnis seiner Berechnung, also die Bildung des Erwartungswertes, in solchen Fällen von den tatsächlichen Werten ab.

Die bereits erwähnten Intervalle li der Breite di um die Punkt Pi sind auch in der Fig. 5 eingezeichnet. Der Verlauf 62 ergibt sich typischerweise dann, wenn bei steigender Drehzahl Voreinspritzungen fehlerhaft ausbleiben. Bei diesem Mengenfehler tritt das Bitmuster 0 0 1 0 auf.

Der Verlauf 64 ergibt sich dann, wenn fehlerhaft zu wenig eingespritzt wird und der Verlauf 66 ergibt sich dann, wenn fehlerhaft zuviel eingespritzt wird. Auch bei diesen beiden Mengenfehlern tritt das Bitmuster 0 0 1 0 auf, so dass dieses Bitmuster insgesamt für fehlerhafte Berechnungen in Folge von Mengenfehlern in der Kraftstoffdosierung charakteristisch ist.

Bei dem oben erläuterten Ausführungsbeispiel werden die ersten Fehlerbit-Muster 0 1 0 0 und 1 0 0 1 einer fehlerhaften Erfassung zugeordnet, während das zweite Muster 0 0 1 0 einer fehlerhaften Berechnung zugeordnet ist. Darüber hinaus wird das Muster 0 0 0 0 in einer bevorzugten Ausgestaltung einem fehlerfreien System zugeordnet:

| | |
|---|---|
| 0 0 0 0 | fehlerfreies System |
| 0 1 0 0 | fehlerhafte Erfassung durch einen fehlerhaft verzögernden Abgassensor 36 |
| 1 0 0 1 | fehlerhafte Erfassung durch eine fehlerhaft gestreckte oder gestauchte Kennlinie des Abgassensors 36 |
| 0 0 1 0 | fehlerhafte Berechnung als Folge einer fehlerhaften Kraftstoffdosierung |

Insgesamt weist das Verfahren zur Unterscheidung einer fehlerhaft erwarteten Konzentration von einer fehlerhaft erfassten Konzentration eines Abgasbestandteils eines Verbrennungsmotors die folgenden Schritte auf:
Einstellen einer tatsächlichen Konzentration durch Vorgabe von Luftmengenstellwerten und Kraftstoffmengenstellwerten, Betreiben des Verbrennungsmotors in verschiedenen Betriebspunkten P1, P2, P3, P4 mit Betriebspunkt-individuell vorgegebenen Luftmengenstellwerten und Kraftstoffmengenstellwerten, Erfassen und Berechnen von Werten der Konzentration in den Betriebspunkten und/oder beim Übergang zwischen den Betriebspunkten, Bestimmen von Abweichungen zwischen den jeweils in einem Betriebspunkt erfassten und erwarteten Werte der Konzentration, Vergleichen der Abweichungen mit vorgegebenen Schwellenwerten, Erzeugen eines Musters von Fehlerbits durch Setzen eines Betriebspunkt-individuellen Fehlerbits, wenn eine Abweichung in einem individuellen Betriebspunkt einen Schwellenwert überschreitet, und Unterscheiden einer fehlerhaft erwarteten Konzentration von einer fehlerhaft erfassten Konzentration des Abgasbestandteils durch Zuordnung wenigstens eines ersten Musters zu einer fehlerhaft erfassten Konzentration und wenigstens eines zweiten Musters zu einer fehlerhaft erwarteten Konzentration.

## Patentansprüche

1. Verfahren zur Unterscheidung einer fehlerhaft erwarteten Konzentration von einer fehlerhaft erfassten Konzentration eines Abgasbestandteils eines Verbrennungsmotors (10), wobei sich eine tatsächliche Konzentration durch Vorgabe von Luftmengenstellwerten (LMSW) und Kraftstoffmengenstellwerten (KMSW) einstellt, mit den Schritten:
Betreiben des Verbrennungsmotors (10) in verschiedenen Betriebspunkten (P1, P2, P3, P4) mit Betriebspunkt-individuell vorgegebenen Luftmengenstellwerten und Kraftstoffmengenstellwerten,
Erfassen und Berechnen von Werten der Konzentration in den Betriebspunkten (P1, P2, P3, P4) und/oder beim Übergang zwischen den Betriebspunkten (P1, P2, P3, P4), Bestimmen von Abweichungen zwischen den jeweils in einem Betriebspunkt (P1, P2, P3, P4) erfassten und erwarteten Werten der Konzentration,
Vergleichen der Abweichungen mit vorgegebenen Schwellenwerten,
Erzeugen eines Musters von Fehlerbits durch Setzen eines Betriebspunkt-individuellen Fehlerbits, wenn eine Abweichung in einem individuellen Betriebspunkt (P1, P2, P3, P4) einen Schwellenwert überschreitet, und
Unterscheiden einer fehlerhaft erwarteten Konzentration von einer fehlerhaft erfassten Konzentration des Abgasbestandteils durch Zuordnung wenigstens eines ersten Musters zu einer fehlerhaft erfassten Konzentration und wenigstens eines zweiten Musters zu einer fehlerhaft erwarteten Konzentration, **gekennzeichnet durch** Einstellen fester Luftmengenstellwerte und eines ersten Kraftstoffmengenstellwerts in einem ersten Betriebspunkt (P1),
Erfassen und Berechnen erster Werte der Konzentration in dem Betriebspunkt (P1), Betreiben des Verbrennungsmotors (10) bei den festen Luftmengenstellwerten mit einem veränderten Kraftstoffmengenstellwert (KMSW2), bei dem die Drehzahl des Verbrennungsmotors (10) ansteigt,
Erfassen und Berechnen zweiter Werte der Konzentration in einem zweiten Betriebspunkt (P2), definiert **durch** einen vorgegebenen ersten Abstand (S1_KWW) zum Beginn des Betriebs mit dem veränderten Kraftstoffmengenstellwert (KMSW2),
in einem vorgegebenen zweiten Abstand (S2_KWW) zum Beginn des Betriebs mit dem veränderten Kraftstoffmengenstellwert (KMSW2), Erfassen und Berechnen dritter Werte der Konzentration in einem dritten Betriebspunkt (P3),
Abschalten der Kraftstoffzufuhr,
in einem vierten Betriebspunkt (P4), in dem sich am Ort der Erfassung der Konzentration bei abgeschalteter Kraftstoffzufuhr eine Konzentration des Abgasbestandteils eingestellt hat, die der Konzentration des Abgasbestandteils in der Umgebungsluft entspricht, Erfassen und Berechnen vierter Werte der Konzentration..

2. Verfahren nach Anspruch 1, **dadurch gekennzeichnet, dass** der Abgasbestandteil eine Sauerstoffkonzentration oder eine Stickoxidkonzentration ist.

3. Verfahren nach einem der vorhergehenden Ansprüche, **dadurch gekennzeichnet, dass** die Luftmengensteliwerte vorgegebenen Stellpositionen eines Regelklappenstellers und/oder eines Ladedruckstellers und/oder eines Drallklappenstellers und/oder eines Abgasrückführventils zugeordnet sind.

4. Verfahren nach einem der vorhergehenden Ansprüche, **dadurch gekennzeichnet, dass** das Ausmaß und und/oder die Dauer der Veränderung des Kraftstoffmengenstellwerts vor dem Abschalten der Kraftstoffzufuhr im Leerlauf des Verbrennungsmotors (10) erfolgt und so bemessen ist, dass die Drehzahl des Verbrennungsmotors (10) einen vorgegebenen Maximalwert nicht überschreitet.

5. Verfahren nach Anspruch 4, **dadurch gekennzeichnet, dass** das Ausmaß und und/oder die Dauer der Veränderung des Kraftstoffmengenstellwerts (KMSW) vor dem Abschalten der Kraftstoffzufuhr im Leerlauf des Verbrennungsmotors (10) erfolgt und der veränderte Kraftstoffmengenstellwert (KMSW2) so bemessen ist, dass die Drehzahl auf einen Wert steigt, der bei der nachfolgenden Abschaltung der Kraftstoffzufuhr ausreicht, um den Verbrennungsmotor (10) nicht vor dem Erreichen des vierten Betriebspunktes (P4) ausgehen zu lassen.

6. Verfahren nach einem der vorhergehenden Ansprüche, **dadurch gekennzeichnet, dass** es bei stehendem Fahrzeug durchgeführt wird.

7. Steuergerät (46) eines Verbrennungsmotors (10), das dazu eingerichtet ist, eine Unterscheidung einer fehlerhaft erwarteten Konzentration von einer fehlerhaft erfassten Konzentration eines Abgasbestandteils des Verbrennungsmotors (10) zu ermöglichen, und das dazu eingerichtet ist,
Luftmengenstellwerte (LMSW) und Kraftstoffmengenstellwerte (KMSW) vorzugeben, bei denen sich eine tatsächliche Konzentration einstellt,
den Verbrennungsmotor (10) in verschiedenen Betriebspunkten (P1, P2, P3, P4) mit Betriebspunkt-individuell vorgegebenen Luftmengenstellwerten und Kraftstoffmengenstellwerten zu betreiben,
Werte der Konzentration in den Betriebspunkten (P1, P2, P3, P4) und/oder beim Übergang zwischen den Betriebspunkten (P1, P2, P3, P4) zu erfassen und zu berechnen,
Abweichungen zwischen den jeweils in einem Betriebspunkt (P1, P2, P3, P4) erfassten und erwarteten Werte der Konzentration zu bestimmen,
die Abweichungen mit vorgegebenen Schwellenwerten zu vergleichen,
ein Muster von Fehlerbits zu erzeugen, indem es einen Betriebspunkt-individuellen Fehlerbit setzt, wenn eine Abweichung in einem individuellen Betriebspunkt (P1, P2, P3, P4) einen Schwellenwert überschreitet, und
eine fehlerhaft erwartete Konzentration von einer fehlerhaft erfassten Konzentration des Abgasbestandteils durch Zuordnung wenigstens eines ersten Musters zu einer fehlerhaft erfassten Konzentration und wenigstens eines zweiten Musters zu einer fehlerhaft erwarteten Konzentration zu unterscheiden, **dadurch gekennzeichnet, dass** das Steuergerät dazu eingerichtet ist, feste Luftmengenstellwerte und einen ersten Kraftstoffmengenstellwert in einem ersten Betriebspunkt (P1) einzustellen,
erste Werte der Konzentration in dem Betriebspunkt (P1) zu erfassen und zu berechnen,
den Verbrennungsmotor (10) bei den festen Luftmengenstellwerten mit einem veränderten Kraftstoffmengenstellwert (KMSW2) zu betreiben, bei dem die Drehzahl des Verbrennungsmotors (10) ansteigt,
zweite Werte der Konzentration in einem zweiten Betriebspunkt (P2), definiert durch einen vorgegebenen ersten Abstand (S1_KWW) zum Beginn des Betriebs mit dem veränderten Kraftstoffmengenstellwert (KMSW2), zu erfassen und zu berechnen
in einem vorgegebenen zweiten Abstand (S2_KWW) zum Beginn des Betriebs mit dem veränderten Kraftstoffmengenstellwert (KMSW2), dritte Werte der Konzentration in einem dritten Betriebspunkt (P3) zu erfassen und zu berechnen,
die Kraftstoffzufuhr abzuschalten, und
in einem vierten Betriebspunkt (P4), in dem sich am Ort der Erfassung der Konzentration bei abgeschalteter Kraftstoffzufuhr eine Konzentration des Abgasbestandteils eingestellt hat, die der Konzentration des Abgasbestandteils in der Umgebungsluft entspricht, vierte Werte der Konzentration zu erfassen und zu berechnen.

8. Steuergerät (46) nach Anspruch 7, **dadurch gekennzeichnet, dass** es dazu eingerichtet ist, ein Verfahren nach einem der Ansprüche 2 bis 6 durchzuführen.

9. Testgerät (50), das dazu eingerichtet ist, in Verbindung mit einem Steuergerät (46) eines Verbrennungsmotors (10) ein Verfahren nach einem der Ansprüche 2 bis 6 durchzuführen.

10. Steuergerät (46) nach Anspruch 7 oder 8, **dadurch gekennzeichnet, dass** es dazu eingerichtet ist, das Verfahren in Verbindung mit einem externen Testgerät (50) durchzuführen.

## Claims

1. Method for differentiating an incorrectly expected concentration from an incorrectly detected concentration of an exhaust gas component of an internal combustion engine (10), wherein an actual concentration is set by predefining air-quantity-actuating values (LMSW) and fuel-quantity-actuating values (KMSW), comprising the steps:
operating the internal combustion engine (10) at various operating points (P1, P2, P3, P4) with air-quantity-actuating values and fuel-quantity-actuating values which are predefined on an operating-point-specific basis,
detecting and calculating values of the concentration at the operating points (P1, P2, P3, P4) and/or at the transition between the operating points (P1, P2, P3, P4),
determining deviations between the values of the concentration which are respectively detected and expected at an operating point (P1, P2, P3, P4),
comparing the deviations with predefined threshold values,
generating a pattern of fault bits by setting an operator-point-specific fault bit if a deviation at a specific operating point (P1, P2, P3, P4) exceeds a threshold value and
differentiating an incorrectly expected concentration from an incorrectly detected concentration of the exhaust gas component by assigning at least one first pattern to an incorrectly detected concentration and at least one second pattern to an incorrectly expected concentration, **characterized by** setting fixed air-quantity-actuating values and a first fuel-quantity-actuating value at a first operating point (P1),
detecting and calculating first values of the concentration at the operating point (P1),
operating the internal combustion engine (10) at the fixed air-quantity-actuating values with a changed fuel-quantity-actuating value (KMSW2) at which the rotational speed of the internal combustion engine (10) rises,
detecting and calculating second values of the concentration at a second operating point (P2), defined by a predefined first distance (S1_KWW) at the start of the operation with the changed fuel-quantity-actuating value (KMSW2), at a predefined second distance (S2_KWW) at the start of the operation with the changed fuel-quantity-actuating value (KMSW2), detecting and calculating third values of the concentration at a third operating point (P3),
switching off the fuel supply,
at a fourth operating point (P4), at which at the location of the detection of the concentration, with the fuel supply switched off, a concentration of the exhaust gas component has been set which corresponds to the concentration of the exhaust gas component in the ambient air, detection and calculation of fourth values of the concentration.

2. Method according to Claim 1, **characterized in that** the exhaust gas component is an oxygen concentration or a nitrogen oxide concentration.

3. Method according to one of the preceding claims, quantity-**characterized in that** the air-quantity-actuating values are assigned to predefined actuating positions of a regulating actuator and/or a charge pressure actuator and/or a tumble valve actuator and/or an exhaust gas recirculation valve.

4. Method according to one of the preceding claims, **characterized in that** the magnitude and and/or the duration of the change in the fuel-quantity-actuating value take/takes place in the idling mode of the internal combustion engine (10) before the switching off of the fuel supply and are/is dimensioned in such a way that the rotational speed of the internal combustion engine (10) does not exceed a predefined maximum value.

5. Method according to Claim 4, **characterized in that** the magnitude and/or the duration of the change in the fuel-quantity-actuating value (KMSW) take/takes place in the idling mode of the internal combustion engine (10) before the switching off of the fuel supply, and the changed fuel-quantity-actuating value (KMSW2) is dimensioned in such a way that the rotational speed rises to a value which, when the fuel supply is subsequently switched off, is sufficient to prevent the internal combustion engine (10) from coming to a standstill before the fourth operating point (P4) is reached.

6. Method according to one of the preceding claims, **characterized in that** the method is carried out when the vehicle is stationary.

7. Control unit (46) of an internal combustion engine (10) which is configured to permit differentiation of an incorrectly expected concentration from an incorrectly detected concentration of an exhaust gas component of the internal combustion engine (10), and which is configured to
predefine air-quantity-actuating values (LMSW) and fuel-quantity-actuating values (KMSW) at which an actual concentration is set,
to operate the internal combustion engine (10) at various operating points (P1, P2, P3, P4) with air-quantity-actuating values and fuel-quantity-actuating values which are predefined on an operating-point-specific basis,
to detect and to calculate values of the concentration at the operating points (P1, P2, P3, P4) and/or at the transition between the operating points (P1, P2, P3, P4),
to determine deviations between the values of the concentration which are respectively detected and expected at an operating point (P1, P2, P3, P4),
to compare the deviations with predefined threshold values,
to generate a pattern of fault bits by setting an operating-point-specific fault bit if a deviation at a specific operating point (P1, P2, P3, P4) exceeds a threshold value, and
to differentiate an incorrectly expected concentration from an incorrectly detected concentration of the exhaust gas component by assigning at least one first pattern to an incorrectly detected concentration and at least one second pattern to an incorrectly expected concentration, **characterized in that** the control unit is configured to set fixed air-quantity-actuating values and a first fuel-quantity-actuating value at a first operating point (P1),
to detect and to calculate first values of the concentration at the operating point (P1),
to operate the internal combustion engine (10) at the fixed air-quantity-actuating values with a changed fuel-quantity-actuating value (KMSW2) at which the rotational speed of the internal combustion engine (10) rises, to detect and to calculate second values of the concentration at a second operating point (P2), defined by a predefined first distance (S1_KWW) at the start of the operation with the changed fuel-quantity-actuating value (KMSW2),
to detect and to calculate, third values of the concentration at a third operating point (P3) at a predefined second distance (S2_KWW) at the start of the operation with the changed fuel-quantity-actuating value (KMSW2),
to switch off the fuel supply, and
to detect and to calculate, fourth values of the concentration at a fourth operating point (P4), at which at the location of the detection of the concentration, with the fuel supply switched off, a concentration of the exhaust gas component has been set which corresponds to the concentration of the exhaust component in the ambient air.

8. Control unit (46) according to Claim 7, **characterized in that** said control unit (46) is configured to carry out a method according to one of Claims 2 to 6.

9. Test unit (50) which is configured to carry out, in conjunction with a control unit (46) of an internal combustion engine (10), a method according to one of Claims 2 to 6.

10. Control unit (46) according to Claim 7 or 8, **characterized in that** said control unit (46) is configured to carry out the method in conjunction with an external test unit (50).

## Revendications

1. Procédé pour distinguer une concentration erronément attendue d'une concentration erronément saisie d'un composant des gaz d'échappement d'un moteur (10) à combustion interne, une concentration effective étant établie en imposant des valeurs (LMSW) de réglage de débit d'air et des valeurs (KMSW) de réglage de débit de carburant, le procédé présentant les étapes suivantes :
conduite du moteur (10) à combustion interne en différents points de fonctionnement (P1, P2, P3, P4) qui présentent chacun des valeurs, prédéterminées individuellement pour chaque point de fonctionnement, de réglage de débit d'air et de réglage de débit de carburant,
saisie et calcul des valeurs de concentration aux points de fonctionnement (P1, P2, P3, P4) et/ou à la transition entre les points de fonctionnement (P1, P2, P3, P4),
détermination des écarts entre les valeurs de concentration saisies et attendues à chacun des points de fonctionnement (P1, P2, P3, P4),
comparaison des écarts à des valeurs de seuil prédéterminées,
formation d'un motif de bits d'erreur par fixation d'un bit d'erreur individuel pour chaque point de fonctionnement si l'écart dépasse une valeur de seuil au point de fonctionnement (P1, P2, P3, P4) individuel et
distinction entre une concentration erronément attendue et une concentration erronément saisie du composant des gaz d'échappement en attribuant au moins un premier motif à une concentration erronément saisie et au moins un deuxième motif à une concentration erronément attendue,
**caractérisé par**
l'établissement de valeurs fixes de débit d'air et d'une première valeur de débit de carburant en un premier point de fonctionnement (P1),
la saisie et le calcul de premières valeurs de la concentration au point de fonctionnement (P1),
la conduite du moteur (10) à combustion interne aux valeurs fixes de débit d'air et à une valeur modifiée (KMSW2) de débit de carburant pour laquelle le régime du moteur (10) à combustion interne augmente,
la saisie et le calcul de deuxièmes valeurs de la concentration en un deuxième point de fonctionnement (P2) défini par une première distance prédéterminée (S1_KWW) entre le début du fonctionnement et la valeur modifiée (KMSW2) de réglage de débit de carburant,
la saisie et le calcul de troisièmes valeurs de la concentration en un troisième point de fonctionnement (P3) situé à une deuxième distance prédéterminée (S2_KWW) entre le début du fonctionnement et la valeur modifiée (KMSW2) de réglage de débit de carburant,
le débranchement de l'amenée de carburant et
la saisie et le calcul de quatrièmes valeurs de la concentration en un quatrième point de fonctionnement (P4) auquel, au moment de la saisie de la concentration avec interruption de l'apport de carburant, la concentration du composant des gaz d'échappement qui s'est établie correspond à la concentration du composant des gaz d'échappement dans l'air ambiant.

2. Procédé selon la revendication 1, **caractérisé en ce que** le composant des gaz d'échappement est la concentration en oxygène ou la concentration en oxyde d'azote.

3. Procédé selon l'une des revendications précédentes, **caractérisé en ce que** les valeurs de réglage de débit d'air sont associées à des positions prédéterminées de réglage d'un régleur de clapet de régulation, d'un régleur de pression de suralimentation, d'un régleur de clapet de tourbillonnage et/ou d'une soupape de recirculation des gaz d'échappement.

4. Procédé selon l'une des revendications précédentes, **caractérisé en ce que** le niveau et et/ou la durée de la modification de la valeur de réglage de débit de carburant ont lieu quand le moteur (10) à combustion interne tourne à vide avant le débranchement de l'amenée de carburant et sont dimensionnés de telle sorte que le régime du moteur (10) à combustion interne ne dépasse pas une valeur maximale prédéterminée.

5. Procédé selon la revendication 4, **caractérisé en ce que** le niveau et et/ou la durée de la modification de la valeur (KMSW) de réglage de débit de carburant ont lieu quand le moteur (10) à combustion interne tourne à vide avant le débranchement de l'amenée de carburant, la valeur modifiée (KMSW2) de réglage de débit de carburant étant dimensionnée de telle sorte que le régime augmente à une valeur qui suffit, lors de l'interruption ultérieure de l'amenée de carburant, pour ne pas laisser le moteur (10) à combustion interne s'éteindre avant d'avoir atteint le quatrième point de fonctionnement (P4).

6. Procédé selon l'une des revendications précédentes, **caractérisé en ce qu'**il est réalisé sur un véhicule à l'arrêt.

7. Appareil de commande (46) d'un moteur (10) à combustion interne, conçu pour permettre de distinguer entre une concentration erronément attendue et une concentration erronément saisie d'un composant des gaz d'échappement d'un moteur (10) à combustion interne, et conçu pour
imposer des valeurs (LMSW) de réglage de débit d'air et des valeurs (KMSW) de réglage de débit de carburant auxquelles s'établit une concentration effective,
conduire le moteur (10) à combustion interne en différents points de fonctionnement (P1, P2, P3, P4) qui présentent chacun des valeurs, prédéterminées individuellement pour chaque point de fonctionnement, de réglage de débit d'air et de réglage de débit de carburant,
saisir et calculer les valeurs de concentration aux points de fonctionnement (P1, P2, P3, P4) et/ou à la transition entre les points de fonctionnement. (P1, P2, P3, P4),
déterminer les écarts entre les valeurs de concentration saisies et attendues à chacun des points de fonctionnement (P1, P2, P3, P4),
comparer les écarts à des valeurs de seuil prédéterminées,
former un motif de bits d'erreur en fixant un bit d'erreur individuel pour chaque point de fonctionnement si l'écart dépasse une valeur de seuil au point de fonctionnement (P1, P2, P3, P4) individuel et
distinguer entre une concentration erronément attendue et une concentration erronément saisie du composant des gaz d'échappement en attribuant au moins un premier motif à une concentration erronément saisie et au moins un deuxième motif à une concentration erronément attendue,
**caractérisé en ce que** l'appareil de commande est conçu pour
établer des valeurs fixes de débit d'air et d'une première valeur de débit de carburant en un premier point de fonctionnement (P1),
saisir et calculer des premières valeurs de la concentration au point de fonctionnement (P1),
conduire le moteur (10) à combustion interne aux valeurs fixes de débit d'air et à une valeur modifiée (KMSW2) de débit de carburant pour laquelle le régime du moteur (10) à combustion interne augmente,
saisir et calculer des deuxièmes valeurs de la concentration en un deuxième point de fonctionnement (P2) défini par une première distance prédéterminée (S1_KWW) entre le début du fonctionnement et la valeur modifiée (KMSW2) de réglage de débit de carburant,
saisir et calculer des troisièmes valeurs de la concentration en un troisième point de fonctionnement (P3) situé à une deuxième distance prédéterminée (S2_KWW) entre le début du fonctionnement et la valeur modifiée (KMSW2) de réglage de débit de carburant,
débrancher l'amenée de carburant et
saisi et calculer des quatrièmes valeurs de la concentration en un quatrième point de fonctionnement (P4) auquel, au moment de la saisie de la concentration avec interruption de l'apport de carburant, la concentration du composant des gaz d'échappement qui s'est établie correspond à la concentration du composant des gaz d'échappement dans l'air ambiant.

8. Appareil de commande (46) selon la revendication 7, **caractérisé en ce qu'**il est conçu pour mettre en oeuvre un procédé selon l'une des revendications 2 à 6.

9. Appareil de test (50) conçu pour, en association avec un appareil de commande (46) d'un moteur (10) à combustion interne, mettre en oeuvre un procédé selon l'une des revendications 2 à 6.

10. Appareil de commande (46) selon les revendications 7 ou 8, **caractérisé en ce qu'**il est conçu pour mettre en oeuvre le procédé en association avec un appareil de test externe (50).
